# EUROPÄISCHE PATENTSCHRIFT

(11) **EP 1 902 085 B1**
(45) Veröffentlichungstag und Bekanntmachung des Hinweises auf die Patenterteilung: **19.11.2008**
(21) Anmeldenummer: 06754377.7
(22) Anmeldetag: 14.06.2006
(51) Int. Cl.: C08G 65/00, C04B 24/26

(54) **POLYETHER-HALTIGES COPOLYMER**
POLYETHER-CONTAINING COPOLYMER
COPOLYMERE CONTENANT DU POLYETHER

(30) Priorität: 14.06.2005 DE 102005027464; 08.06.2006 DE 102006027035
(43) Veröffentlichungstag der Anmeldung: 26.03.2008
(73) Patentinhaber: BASF Construction Polymers GmbH, 83308 Trostberg (DE)
(72) Erfinder: BICHLER, Manfred, 84549 Engelsberg (DE); HOMMER, Herbert, 84453 Mühldorf (DE); WUTZ, Konrad, 83308 Trostberg (DE)
(74) Vertreter: Böhm, Brigitte
(86) Internationale Anmeldenummer: PCT/EP2006/005747
(87) Internationale Veröffentlichungsnummer: WO 2006/133933

(56) Entgegenhaltungen:
- EP-A- 0 537 870
- EP-A2- 1 103 570
- WO-A-00/48961

## Beschreibung

Gegenstand der vorliegenden Erfindung ist ein Copolymer auf Polyetherbasis, bestehend aus zwei Monomer-Komponenten sowie dessen Verwendung.

In der Vergangenheit wurde eine Vielzahl organischer Verbindungen verwendet, um die Eigenschaften von noch nicht ausgehärteten hydraulischen Zementzusammensetzungen positiv zu beeinflussen. Eines der bekanntesten Beispiele in diesem Zusammenhang stellen die dispergierend wirkenden sogenannten Superverflüssiger ("Superplasticizer") dar, die in der Lage sind, noch nicht ausgehärtete Zementzusammensetzungen bei bestimmten Zement/Wasser-Verhältnissen zu verflüssigen. Eine kontrollierte Fließfähigkeit derartiger Massen wird vor allem deshalb gewünscht, damit sich die Zuschlagstoffe (Aggregate), die in den entsprechenden Mörtel- und Betonmischungen verwendet werden, nicht entmischen und sich in der Folge nicht absetzen. Der Zusatz von Superverflüssigern zeigt aber auch den Vorteil, dass weniger Anmachwasser verwendet werden kann, ohne dabei die Konsistenz der Mischung negativ zu verändern. Normalerweise führen nämlich geringere Mengen an Anmachwasser im Frischbeton zu starkem Verflüssigungsabfall und im Festbeton zu erhöhten Druckfestigkeiten.

Superverflüssiger in guter Qualität sollten die noch nicht ausgehärtete Zementzusammensetzung aber nicht nur verflüssigen, sondern auch deren Fließfähigkeit über einen bestimmten Zeitraum aufrechterhalten. Dies ist vor allen Dingen im Transportbetonbereich von Bedeutung, da der Ort der Erzeugung/Abmischung in diesem Fall zumeist weit vom eigentlichen Ort des Einsatzes bzw. der Verarbeitung entfernt ist. Hinzu kommt noch die Zeitdauer für die Entladung des Transportfahrzeuges sowie die Verarbeitungszeit selbst. Auf der anderen Seite können Zementmischungen nicht unbegrenzt im verflüssigten Zustand gehalten werden, d.h. das Aushärten darf nicht zu sehr verzögert werden, da sich dies natürlich auf die Verarbeitung, aber auch auf die Eigenschaften des ausgehärteten Produktes negativ auswirken würde.

Bekannte Vertreter von Superflüssigern stellen sulfonierte Melamin/Formaldehyd-Kondesationsprodukte dar, aber auch sulfonierte Kondensationsprodukte von Naphthalin/Formaldehyd sowie Lignosulfonate, Polysaccharide, Hydroxycarbonsäuren und deren Salze und Kohlenhydrate.

Bei den meisten bekannten Verflüssigern handelt es sich um mehrkomponentige Produkte, wobei sich Copolymere auf Basis von Oxyalkylenglykolalkenylethern und ungesättigten Dicarbonsäure-Derivaten insbesondere durchgesetzt haben. Das europäische Patent EP 0 736 553 B1 beschreibt solche Copolymere, bestehend aus mindestens drei Baugruppen, nämlich einem ungesättigten Dicarbonsäure-Derivat, einem Oxyalkylenglykolalkenylether sowie im Wesentlichen einem hydrophoben Strukturelement wie sie bspw. Esterstruktureitlheiten darstellen können. Die dritte Baugruppe kann auch Polypropylenoxid- bzw. PolypropylenoxidPolyethylenoxid-Derivate aufweisen.

Die deutsche Offenlegungsschrift DE 195 43 304 A1 beschreibt ein Zusatzmittel für wasserhaltige Baustoffmischungen, welches aus a) einem wasserlöslichen Sulfonsäure-, Carbonsäure- oder Sulfatgruppen enthaltenden Cellulose-Derivat sowie b) einem Sulfonsäure- und/oder Carbonsäure-haltigen Vinyl-(Co)-Polymerisat und/oder einem Kondensationsprodukt auf Basis von Aminoplastbildnern oder Arylverbindungen und Formaldehyd besteht. Dieses Zusatzmittel soll gute Wasserrückhaltevermögen und Rheologie-modifizierende Eigenschaften aufweisen, weshalb es für Baustoffmischungen besonders gut geeignet sein soll, die Zement, Kalk, Gips, Anhydrit und andere hydraulische Bindemittel enthalten.

Ebenfalls bekannt sind Copolymere von ethylenisch ungesättigten Ethern, die als Verflüssiger für zementhaltige Mischungen eingesetzt werden können (EP 0 537 870 A1). Diese Copolymere enthalten neben dem Ether-Comonomer als weiteres Comonomer eine olefinisch ungesättigte Monocarbonsäure bzw. einen Ester oder ein Salz davon, oder aber eine olefinisch ungesättigte Schwefelsäure. Diese Copolymere zeichnen sich insbesondere durch eine äußerst kurze Ether-Seitenkettenlänge aus, die zwischen 1 und 50 Einheiten liegt. Dies soll u. a. dazu beitragen, dass diese Copolymere in zementhaltigen Massen eine gute verflüssigende Wirkung entfalten, wobei die Baustoffmassen selbst einen geringen Verarbeitungssverlust ("slump loss") zeigen.

Aufgrund der unterschiedlichen Eigenschaften und Verfügbarkeiten der genannten Verflüssiger besteht auch weiterhin das Bestreben, neue alternative Polymere mit dispergierenden Eigenschaften zur Verfügung zu stellen. Dabei steht natürlich das Bestreben im Vordergrund, Additive für hydraulische Zementzusammensetzungen bereit zu stellen, die den nicht ausgehärteten Mischungen eine ausgezeichnete Verarbeitbarkeit und vor allem Fließfähigkeit über einen gewünschten Zeitraum verleihen, wobei die wässrige Bindemittelsuspenion möglichst wenig an Verarbeitbarkeitseigenschaften verlieren soll. Darüber hinaus sollten die jeweiligen Eigenschaften der Copolymere nach Möglichkeit frei einstellbar sein, was bei den bislang bekannten Verbindungen nur unzureichend möglich ist.

Gelöst wurde diese Aufgabe mit einem Copolymer, bestehend aus zwei Monomer-Komponenten (A) und (B), wobei
(A) ein olefinisch ungesättigtes Monocarbonsäure-Comonomer oder einen Ester oder ein Salz davon darstellt, oder ein olefinisch ungesättigtes Schwefelsäure-Comonomer oder ein Salz davon darstellt, und
(B) ein Comonomer der allgemeinen Formel (I) 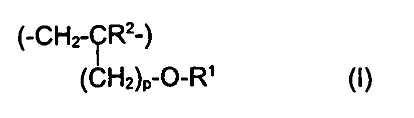 darstellt, worin R¹ für 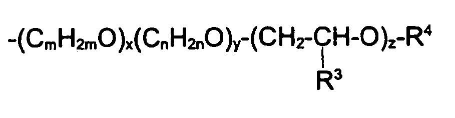 steht und R² für Wasserstoff oder
wobei R³ ein unsubstituierter oder substituierter Arylrest und bevorzugt Phenyl, und R⁴ Wasserstoff, ein aliphatischer Kohlenwasserstoffrest mit 1 bis 20 C-Atomen, ein cycloaliphatischer Kohlenwasserstoffrest mit 5 bis 8 C-Atomen, ein substituierter Arylrest mit 6 bis 14 C-Atomen oder ein Vertreter aus der Gruppe bestehend aus 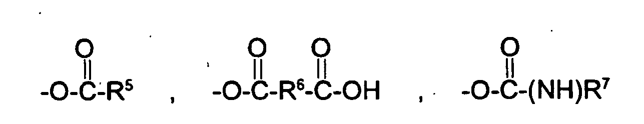 ist, wobei R⁵ und R⁷ jeweils für einen Alkyl-, Aryl-, Aralkyl-, oder Alkaryl-Rest stehen und R⁶ für einen Alkyliden-, Aryliden-, Aralkyliden- oder Alkaryliden-Rest steht,
p = 0 ist,
m, n = 2 bis 4 sind,
x und y unabhängig voneinander 55 bis 350 bedeuten, und
z = 0 bis 200 ist.

In einer Ausführungsform ist z = 0, in einer weiteren bevorzugten Ausführungsform ist z = 1 bis 200, insbesondere 10 bis 100.

Die Bezeichnungen "Alkyl" und "Alkyliden", wie hierin verwendet, bezeichnen Kohlenwasserstoffgruppen mit vorzugsweise 1 bis 20 C-Atomen, insbesondere mit 1 bis 6 C-Atomen.

Die Bezeichnungen "Aryl", Aralkyl", "Alkaryl", "Aryliden", "Aralkyliden" und "Alkaryliden" stehen für Kohlenwasserstoffgruppen mit vorzugsweise 5 bis 20, insbesondere 5 bis 10 C-Atomen.

Überraschend hat sich bei diesen Polymeren herausgestellt, dass sie aufgrund ihrer dispergierend wirkenden Eigenschaften nicht nur ausgezeichnete verflüssigende Eigenschaften über einen gewünschten Zeitraum entwickeln, sondern dass sie als Copolymer über die bekannten Herstellungsverfahren relativ einfach zugänglich sind, so dass sie auch unter wirtschaftlichen Gesichtspunkten eine eindeutige Verbesserung des bekannten Standes der Technik darstellen. Hinzu kommt, dass sie ihre verflüssigende Wirkung nicht nur in Verbindung mit bestimmten hydraulischen Komponenten entwickeln, sondern dass sie sowohl im zementären Mörtel- und Betonbereich als auch im Gipsbereich mit ausgezeichneter Wirkung eingesetzt werden können, wobei die ausgeprägte Wirkung aufgrund der breiten Variierbarkeit u.a. des Ether-Comonomers und hier insbesondere aufgrund der in einem breiten Bereich wählbaren Seitenkettenlänge gezielt eingesteht werden kann.

In diesem Zusammenhang wird unter "Zementzusammensetzung" jedwede Art von nicht ausgehärteten Mischungen verstanden, wie sie beispielsweise in Form von pastösen Gemischen, Mörteln, Betonen, Estrichen und Mischungen vorliegen oder beispielsweise bei der Erdöl- und Erdgasexploration eingesetzt werden. Eine wichtige Funktion üben dabei natürlich die unterschiedlichen Typen an hydraulischen Bindemitteln aus, wie sie die verschiedenen Typen an Zementen (insbesondere Portlandzemente), aber auch Flugaschen, Hochofenschlacken, Silika-Verbindungen, puzzolanische Vertreter und insbesondere die unterschiedlichen Gipstypen darstellen.

Unter "Gips" soll im Zusammenhang mit der vorliegenden Erfindung Calciumsulfat verstanden werden. Calciumsulfat kann in verschiedenen Hydratstufen mit oder auch ohne Kristallwasser vorliegen. Das in der Natur vorkommende Gipsgestein ist Calciumsulfat-Dihydrat, die in der Natur vorkommende kristallwasserfreie Form des Calciumsulfats wird als Anhydrit bezeichnet. Neben den natürlichen Vorkommen ist Calciumsulfat auch als Nebenprodukt bestimmter technischer Prozesse bekannt und wird dann als synthetischer Gips bezeichnet. Ein Beispiel für solche technischen Prozesse ist die Rauchgasentschwefelung (REA-Gips). Weiterhin fällt synthetischer Gips auch bei der Phosphor- und Flußsäureherstellung an. Um Halbhydratformen (CaSO₄ × ½ H₂O) zu erhalten, wird Gips (CaSO₄ × 2 H₂O) unter Abspaltung von Wasser calziniert. Je nach Calcinierungsmethode wird entweder α- oder β-Halbhydrat hergestellt. β-Halbhydrat entsteht bei raschem Erhitzen in offenen Anlagen, wobei das Wasser fast plötzlich entweicht und Hohlräume hinterlässt. α-Halbhydrat bildet sich, wenn man Gips in geschlossenen Autoklaven entwässert. Die Kristallform ist dann dicht und folglich ist auch der Wasseranspruch für dieses Bindemittel deutlich geringer als für β-Halbhydrat.

Auf der anderen Seite rehydratisiert Gipshalbhydrat unter Zugabe von Wasser zu Dihydratkristallen. Üblicherweise vollzieht sich die Wasseranlagerung (Hydratation) von Gips innerhalb weniger Minuten bis einiger Stunden, was im Vergleich zur Hydratation von Zementen, die sich über mehrere Stunden/Tage erstreckt, einen deutlich verkürzten Verarbeitungszeitraum darstellt. Vor allem diese Eigenschaft lässt Gips als attraktive Alternative für Zement als hydraulisches Mittel in zahlreichen Anwendungsgebieten erscheinen, da ausgehärtete Gipsprodukte auch eine ausgeprägte Härte und Druckfestigkeit aufweisen.

Calciumsulfat-halbhydrat ist in der Lage, mindestens zwei Kristallformen auszubilden: α-calzinierter Gips wird überlicherweise in geschlossenen Autoklaven entwässert. Für zahlreiche Anwendungen wird der sogenannte β-calzinierte Gips ausgewählt, da er in ausreichenden Mengen und unter wirtschaftlich günstigen Bedingungen zugänglich ist. Diese Vorteile können aber dadurch aufgehoben werden, dass zu seiner Verarbeitung und insbesondere Verflüssigung größere Wassermengen benötigt werden. Ausgehärtete Gipsmischungen wiederum können aufgrund verbliebener Restwassermengen in der Kristallmatrix zu einer gewissen Schwäche ("Weichheit") neigen, was nicht selten zu Produkten mit geringerer Belastbarkeit und Festigkeit führt, wie sie Gipsprodukte aufweisen, die mit geringeren Wassermengen hergestellt wurden.

Die Verarbeitung von Gips, aber auch anderer hydraulischer Bindemittel, kann insbesondere unter hydraulischen Gesichtspunkten durch die Zugabe von Dispergiermitteln verbessert werden, wofür insbesondere die erfindungsgemäßen Copolymere aufgrund ihrer verflüssigenden Eigenschaften geeignet sind.

Die Copolymere gemäß der vorliegenden Erfindung sind insbesondere dann in der Lage, die vorteilhaften Eigenschaften zu entwickeln, wenn sie die Comonomer-Komponente (A) in Anteilen von 30 bis 99 Mol-% und die Ether-Komponente (B) in Anteilen von 70 bis 1 Mol% enthalten.

Generell ist anzumerken, dass die gemäß vorliegender Erfindung jeweils angegebenen Comonomere bzw. deren mögliche Strukturen sich natürlich auf Baugruppen beziehen, wie sie nach der Polymerisation im beanspruchten Copolymer vorliegen.

Die vorliegende Erfindung sieht auch bevorzugte Varianten vor, die dadurch gekennzeichnet sind, dass zum einen das Copolymer die Comonomer-Komponente (A) in Anteilen von 40 bis 90 Mol-% und die Comonomer-Komponente (B) in Anteilen von 60 bis 10 Mol-% enthält. Zum anderen kann die Comonomer-Komponente (A) für eine Acrylsäure oder ein Salz davon stehen, und die Ether-Komponente (B) mit p = 0 kann eine Vinylgruppe und als R¹ einen Polyether enthalten.

Insgesamt schlägt die vorliegende Erfindung vor, die Comonomer-Komponente (A) aus der Gruppe bestehend aus Acrylsäure, Methacrylsäure, Crotonsäure, Isocrotonsäure, Allylsulfonsäure, Vinylsulfonsäure, und geeigneten Salzen sowie Alkyl- oder Hydroxyalkylestern davon auszuwählen.

Es ist aber auch möglich, andere Comonomere, wie beispielsweise Styrole oder/und Acrylamide, mit der Ether-Komponente (B) und der Comonomer-Komponente (A) zusätzlich zu copolymerisieren. Erfindungsgemäß kommen aber auch hydrophobe Verbindungen in Frage, wobei Verbindungen mit Esterstruktureinheiten, Polypropylenoxid- oder Polypropylenoxid/Polyethylenoxid-(PO/PE-)-Einheiten besonders bevorzugt sind. Die diesbezüglichen Baugruppen sollten in Anteilen bis zu 5 Mol-% am erfindungsgemäßen Copolymer beteiligt sein, wobei Anteile von 0,05 bis 3 Mol-% als bevorzugt, und insbesondere 0,1 bis 1,0 Mol-% als besonders bevorzugt anzusehen sind. Insbesondere empfehlen sich Verbindungen, wie sie in den europäischen Patenten EP 0 736 553 B1 und EP 1 189 955 B1 als Struktureinheiten c) angegeben sind und alle damit zusammenhängenden und dort offenbarten Verbindungsvarianten. EP 0 736 553 B1 und EP 1 189 955 B1 werden im Hinblick auf die Struktur der zusätzlichen Comonomer als substantielle Bestandteile dieser Anmeldung und damit als hierin offenbart angesehen.

Eine weitere bevorzugte Variante der erfindungsgemäßen Copolymere besteht darin, dass die Formel (I) einen Vinylgruppen-haltigen Polyether bedeutet.

Wie bereits angedeutet, können die Copolymere gemäß der vorliegenden Erfindung auf relativ einfache Art und Weise hergestellt werden, wobei die Polymerisation aber insgesamt in einer sauerstoffarmen oder sogar sauerstofffreien Atmosphäre stattfinden sollte. Auch kann das Verfahren unter Zusatz geeigneter Lösemittelmengen stattfinden, um so die Ether-Komponente in Lösung zu bringen. Falls es sich beim Comonomer (B) um eine Mehrfachalkoholgruppe oder einen Alkylenoxid-derivatisierten Mehrfachalkoholrest handelt, bzw. falls R² in der Ether-Komponente Wasserstoff darstellt, wird insbesondere Wasser als Lösemittel bevorzugt. Gegebenenfalls kann sogar eine Mischung aus Wasser und Alkohol, wie z.B. Isopropanol, als Lösungsmittel verwendet werden. Falls R² nicht Wasserstoff darstellt, empfehlen sich organische Lösemittel, und insbesondere Toluol.

Für die Polymerisationsreaktion an sich wird die Mischung auf Raumtemperatur gebracht oder leicht abgekühlt. Empfehlenswert ist auch der Zusatz eines Starters in Form eines Redox-Systems, welches reduzierende und oxidierende Reagenzien umfasst, wofür insbesondere Rongalit^{™} oder Brüggolit^{™} und ein Peroxid oder Persulfat, wie z. B. H₂O₂ oder Ammoniumpersulfat, empfehlen werden. Diese Reagenzien werden vorzugsweise in Systemen eingesetzt, die auf Wasser als Lösemittel zurückgreifen. Es haben sich zwei Varianten als vorteilhaft gezeigt, um optimal Polymere herzustellen :
Variante A: Der Ether-enthaltenden Mischung werden die jeweilige Comonomer-Mischung und die Mischung des reduzierend wirkenden Agens schrittweise und gleichzeitig zugesetzt, was bei Temperaturen zwischen 0 und 50 °C erfolgen sollte.
Variante B: Der kompletten Monomermischung wird die Mischung des oxidierend wirkenden Agens schrittweise zugesetzt.

Anschließend wird die Reaktionsmischung üblicherweise bis zur Peroxidfreiheit gerührt. Falls organische Lösemittel eingesetzt wurden, werden diese abdestilliert. Das Reaktionsprodukt wird dann abgekühlt, und das erhaltene Copolymer wird mit einer Base, wie beispielsweise Alkali-oder Erdalkalimetallen, Aminen oder Alkanolaminen, neutralisiert. Als sehr vorteilhaft hat sich aber die Verwendung einer wässrigen Lösung von Natrium- oder Calciumhydroxid herausgestellt.

Das geschilderte Verfahren stellt beispielhaft einen für die erfindungsgemäßen Copolymere geeigneten Herstellungsprozess dar.

Schließlich sieht die vorliegende Erfindung eine bevorzugte Variante vor, bei der die erhaltenen Copolymere in Pulverform vorliegen. Dies wird insbesondere mit einem abschließenden Trocknungsschritt erreicht, wofür sich erfindungsgemäß eine Sprühtrocknung insbesondere eignet. Gegenüber dem Stand der Technik werden so vorteilhafte pulverförmige Copolymere erhalten, die in jeglicher gewünschten Verdünnung einer hydraulischen Mischung zugesetzt werden können.

Neben dem Copolymer selbst beansprucht die vorliegende Erfindung auch eine ein hydraulisches Bindemittel enthaltende Zusammensetzung, die neben der hydraulischen Komponente das erfindungsgemäße Copolymer enthält. In diesem Zusammenhang werden Zusammensetzungen bevorzugt, bei denen es sich beim hydraulischen Bindemittel um Zement, Gips, Kalk, Anhydrit, oder ein sonstiges auf Calciumsulfat-basierendes Bindemittel handelt.

Ebenfalls beansprucht wird die Verwendung des erfindungsgemäßen Copolymers als Verflüssiger (Superverflüssiger; Dispergiermittel; Fließmittel) für eine nicht ausgehärtete und ein hydraulisches Bindemittel enthaltende Zusammensetzung, wobei das Copolymer vorzugsweise in einer Menge von 0,01 bis 10,0 Gew.-%, und besonders bevorzugt in einer Menge von 0,05 bis 5,0 Gew.-%, jeweils bezogen auf das Gewicht der Bindemittel-Komponente, eingesetzt werden soll.

Ein weiterer Aspekt der beanspruchten Verwendung betrifft die Möglichkeit, dass das erfindungsgemäße Copolymer gemeinsam mit einer Entschäumer-Komponente eingesetzt werden kann. Dies kann erfindungsgemäß in der Weise erfolgen, dass das Copolymer und der Entschäumer in Abhängigkeit vom jeweiligen konkreten Anwendungsfall getrennt voneinander der jeweiligen bauchemischen Zusammensetzung beigemischt werden. Die vorliegende Erfindung berücksichtigt allerdings auch die Möglichkeit, dass das beanspruchte Copolymer die Entschäumer-Komponente als dritte Baugruppe enthält, wodurch die Entschäumer-Komponente einpolymerisiert vorliegt.

Wird der Entschäumer getrennt vom beanspruchten Copolymer zugesetzt, so werden insbesondere die folgenden Vertreter als bevorzugt angesehen: Nichtionische Tenside wie z.B. Copolymere, aufgebaut aus Ethylenoxid-/Propylenoxid-(EO-PO)-Einheiten (Dowfax^{™} der Fa. Dow) oder EO-PO-EO bzw. PO-EO-PO Blockpolymere (Pluronic^{™} der Fa. BASF). Weiterhin können ebenso Entschäumer auf Mineralölbasis eingesetzt werden, die zum Teil auch in Pulverform vorliegen, wie z.B. Agitan-Typen der Fa. Münzing Chemie.

Soll die Entschäumer-Komponente als zusätzliche chemische Baugruppe im Copolymer vorliegen, so eignen sich wiederum die bereits erwähnten Struktureinheiten und Baugruppen c) der europäischen Patente EP 0736 553 B1 und EP 1 189 955 B1.

Zusammenfassend kann festgestellt werden, dass die vorgeschlagenen Copolymere, und insbesondere deren Anwendung als Verflüssiger bzw. Dispergiermittel in Zusammensetzungen, welche hydraulische Bindemittel enthalten, eine deutliche Weiterentwicklung des Standes der Technik darstellen, da sie zu einer gleichmäßigeren Verflüssigung über einen bestimmten Zeitraum führen und dabei einen ungewünschten Flüssigkeitsverlust der angemachten Baustoffmasse vermeiden, so dass sie sogar eine typische Retentionswirkung zeigen. Zudem wird die Pumpfähigkeit und Verarbeitbarkeit der nicht ausgehärteten hydraulischen Bindemittelzusammensetzung deutlich verbessert.

Die nachfolgenden Beispiele verdeutlichen die Vorteile des beanspruchten Copolymers.

### Beispiele

### Synthesebeispiele

### Synthesebeispiel 1

In einem 1 I Vierhalskolben mit Thermometer, Rückflusskühler und einem Anschluss für zwei Zuläufe wurden 350 g Wasser, 350 g (0,06 mol) Polyethylenglycol-5800-monovinylether, sowie 4 g eines Propylenoxid-/Ethylenoxid-(PO-EO)-Blockpolymers mit einer mittleren Molekularmasse von 2000 g/mol ("Entschäumer") und 25 g NaOH (20%) vorgelegt. Getrennt davon wurde eine Mischung aus 45 g (0,63 mol) Acrylsäure in 17 g Wasser hergestellt, wovon 15 g in den Vorlagekolben zur Polyethylenglycol-5800-monovinylether-Lösung gegeben wurden; der pH-Wert nahm auf ca. 8,0 ab. Dann wurden 40 mg Eisen(II)sulfat-Heptahydrat sowie 3,6 g 50 %iges Wasserstoffperoxid hinzugefügt, und aus separaten Zuläufen innerhalb von 20 min und gleichzeitig mit einem konstanten, allerdings unterschiedlichen Massenstrom die restliche Acrylsäure-Mischung sowie 34 g einer 10 %igen Rongalit^{™}-Lösung, in der 6 g Mercaptoethanol enthalten waren, hinzudosiert. Die Temperatur stieg dabei von 23°C auf 35°C an. Nach Zugabeende wies die Reaktionslösung einen pH-Wert von 4,8 auf. Die Lösung wurde bei Raumtemperatur noch 10 min gerührt, bevor sie mit 50 g einer 20 %igen Natronlauge neutralisiert wurde: Man erhielt eine gelb gefärbte, klare, wässrige Polymerlösung mit einem Feststoffgehalt von 45 Gew.-%.

### Synthesebeispiel 2

In dem in Beispiel 1 beschriebenen Kolben wurden 450 g Wasser, 450 g (0,06 mol) Polyethylenglycol-7500-monovinylether und 14 g NaOH (20 %) vorgelegt. Getrennt davon wurde eine Mischung aus 41,8 g (0,58 mol) Acrylsäure in 40 g Wasser hergestellt, und langsam in den Vorlagekolben zur Lösung des Polyethylenglycol-7500-monovinylethers hinzugegeben; der pH-Wert nahm auf ca. 5,5 ab. Dann wurden 40 mg Eisen(II)sulfat-Heptahydrat sowie 4 g Rongalit und 2 g Mercaptoethanol hinzugefügt. Innerhalb von 20 Minuten wurde dann eine Lösung aus 3,6 g 50 %iges Wasserstoffperoxid in 34 g Wasser hinzudosiert. Die Temperatur stieg dabei von 20°C auf 31°C an. Nach Zugabeende wies die Reaktionslösung einen pH-Wert von 5,4 auf. Die Lösung wurde bei Raumtemperatur noch 10 min gerührt, bevor sie mit 60 g 20 %iger Natronlauge neutralisiert wurde. Man erhielt eine leichtgelb gefärbte, klare, wässrige Polymerlösung mit einem Feststoffgehalt von 43 Gew.-%.

### Synthesebeispiel 3

In dem in Beispiel 1 beschriebenen Kolben wurden 490 g Wasser, 350 g (0,06 mol) Polyethylenglycol-5800-monovinylether und 10 g NaOH (20 %) vorgelegt. Getrennt davon wurde eine Mischung aus 26 g (0,36 mol) Acrylsäure in 40 g Wasser hergestellt, und langsam in den Vorlagekolben zur Lösung des Polyethylenglycol-monovinylethers hinzugegeben; der pH-Wert nahm auf ca. 5,3 ab. Dann wurden 40 mg Eisen(II)sulfat-Heptahydrat sowie 4 g Rongalit und 1,5 g Mercaptoethanol hinzugegeben. Nach kurzem Einrühren wurden dann 3,6 g 50 %iges Wasserstoffperoxid hinzudosiert. Die Temperatur stieg dabei von 20°C auf 29°C an. Die Lösung wurde bei Raumtemperatur noch 10 min gerührt, bevor sie mit 37 g 20 %iger Natronlauge neutralisiert wurde. Man erhielt eine leichtgelb gefärbte, klare, wässrige Polymerlösung mit einem Feststoffgehalt von 40 Gew.-%.

### Anwendungsbeispiele

Die in den nachfolgenden Beispielen angegebenen Vergleichsbeispiele 1 und 2 beziehen sich auf die entsprechenden "Examples" 1 (Vergleich 1) bzw. 3 (Vergleich 2) gemäß EP 0 537 870 A1.

### Anwendungsbeispiel 1 (Betonversuche)

Normgemäß wurden in einem Betonzwangsmischer mit 15 ltr Volumen eine Betonrezeptur entsprechend 400 kg/m³ Portlandzement des Typs CEM I 42,5 R mit 1755 kg/m³ Zuschlägen (Sieblinie 0 bis 16), 40 kg/m³ Flugasche und 168 kg/m³ Wasser (abzüglich Wasser aus dem Zusatzmittel; Wasser/Zement-Verhältnis: 0,42) vermischt. Die wässerigen Lösungen der erfindungsgemäßen Copolymere bzw. der Vergleichsprodukte wurden als Fließmittel zugesetzt, wobei 4, 30 und 60 Minuten nach deren Zugabe die Bestimmung der Ausbreitmaße nach DIN 1048 erfolgte.

| Fließmittel | Dos. [%] | Fließmaß in cm nach | | |
|---|---|---|---|---|
| | | 4 min | 30 min | 60 min |
| Vergleich 1 * | 0,22 | 51 | 49 | 42 |
| Synthesebeispiel 1 | 0,22 | 65 | 59 | 50 |
| Synthesebeispiel 2 * | 0,22 | 64 | 61 | 58 |
| Synthesebeispiel 3 * | | 65 | 63 | 60 |

| | | | | |
|---|---|---|---|---|
| *) es wurde eine Entschäumer-Komponente auf Basis eines Polyglykols in einer Dosierung von 1,0 Gew.-%, bezogen auf die Polymer-Komponente, zugesetzt. | | | | |

### Anwendungsbeispiel 2 (Mörtelversuche)

| Standardrichtrezeptur: | |
|---|---|
| Portlandzement (verschiedene Sorten) | 900 g |
| Standard Quarzsand (0-2 mm, EN 196-1) | 1350 g |
| Entschäumer (Agitan P 800) | 0,45 g |
| Dispergiermittel (Fließmittel) | 0,3 % |
| Anmachwasser | je nach Bedarf |

### Mischvorschrift und Bestimmungsmethoden

Die Mörtelmischung wurde gemäß DIN EN 196-1, Abs. 6.3 zubereitet. Das Fließverhalten wurde mit einem Fließrinnentest gemäß der Vergußmörtelrichtlinie des Deutschen Betonvereins eV (Fassung vom Sep. 1990, redaktionell überarbeitet 1996) jeweils nach 5, 30 und 60 Minuten bestimmt. Das Fließverhalten wurde mittels des W/Z-Werts bei Vergleich 1 bei jedem Zementtyp auf 60 bis 75 cm eingestellt.
1. Zement-Typ Milke (CEM I 42,5 R)

| Fließmittel | W/Z | Ausbreitmaß in cm nach | | |
|---|---|---|---|---|
| | | 4 min | 30 min | 60 min |
| Vergleich 1 | 0.24 | 72 | 58 | 0 |
| Vergleich 2 | 0,24 | 70 | 49 | 0 |
| Synthesebeispiel 3 | 0,24 | 73 | 69 | 39 |

2. Zement-Typ Karlstadt (CEM I 42,5 R)

| Fließmittel | W/Z | Ausbreitmaß in cm nach | | |
|---|---|---|---|---|
| | | 4 min | 30 min. | 60 min |
| Vergleich 1 | 0,31 | 60 | 68 | 68 |
| Vergleich 2 | 0,31 | 52 | 50 | 55 |
| Synthesebeispiel 3 | 0,31 | 85 | 85 | 85 |

3. Zement-Typ Mergelstetten (CEM I 42,5 R)

| Fließmittel | W/Z | Ausbreitmaß in cm nach | | |
|---|---|---|---|---|
| | | 4 min | 30 min | 60 min |
| Vergleich 1 | 0,26 | 64 | 0 | 0 |
| Vergleich 2 | 0,26 | 62 | 0 | 0 |
| Synthesebeispiel 3 | 0,26 | 78 | 59 | 26 |

4. Zement-Typ Ube Kosan normal OPC-Zement

| Fließmittel | W/Z | Ausbreitmaß in cm nach | | |
|---|---|---|---|---|
| | | 4 min | 30 min | 60 min |
| Vergleich 1 | 0,245 | 74 | 14 | 0 |
| Vergleich 2 | 0,245 | 74 | 12 | 0 |
| Synthesebeispiel 3 | 0,245 | 77 | 72 | 42 |

### Anwendungsbeispiel 3 (Gipsversuche)

| Standardrichtrezeptur: | |
|---|---|
| 400g Stuckgips | 400 g |
| 140 g Wasser (W/G = 0,35) | 140 g |
| Dispergiermittel (Fließmittel) | 0,35 % |

Der Gips wurde innerhalb von 15 Sekunden in das Wasser gestreut, und anschließend wurde mit einem Hobart-Mischer 60 Sekunden auf schneller Stufe gerührt. Nach 105 Sekunden wurde dann das Fließmaß mit Hilfe eines Ringes (Abmessungen: Höhe: 10 cm, Durchmesser: 5 cm) bestimmt.

| Fließmittel | Fließmaß in cm | Abbindezeit in min:sec |
|---|---|---|
| Vergleich 1 | 12 | 27:20 |
| Vergleich 2 | 13 | 30:00 |
| Synthesebeispiel 2 | 20 | 5:10 |
| Synthesebeispiet 3 | 23 1 | 4:40 |

## Patentansprüche

1. Copolymer, bestehend aus zwei Monomer-Komponenten (A) und (B),
wobei
(A) ein olefinisch ungesättigtes Monocarbonsäure-Comonomer oder einen Ester oder ein Salz davon darstellt, oder ein olefinisch ungesättigtes Schwefelsäure-Comonomer oder ein Salz davon darstellt, und
(B) ein Comonomer der allgemeinen Formel (I) 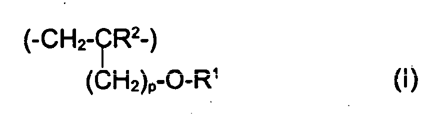 darstellt, worin R¹ für 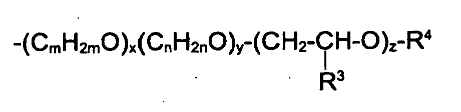 steht und R² für Wasserstoff,
wobei R³ ein unsubstituierter oder substituierter Arylrest und bevorzugt Phenyl ist, und R⁴ Wasserstoff, ein aliphatischer Kohlenwasserstoffrest mit 1 bis 20 C-Atomen, ein cycloaliphatischer Kohlenwasserstoffrest mit 5 bis 8 C-Atomen, ein substituierter Arylrest mit 6 bis 14 C-Atomen oder ein Vertreter aus der Gruppe bestehend aus 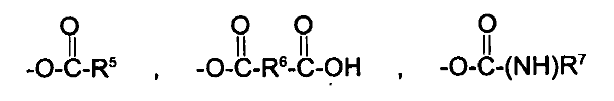 ist, wobei R⁵ und R⁷ jeweils für einen Alkyl-, Aryl-, Aralkyl-, oder Alkaryl-Rest stehen und R⁶ für einen Alkyliden-, Aryliden-, Aralkyliden- oder Alkaryliden-Rest steht,
p = 0 ist,
m, n = 2 bis 4 sind,
x und y unabhängig voneinander 55 bis 350 bedeuten, und
z = 0 bis 200 ist.

2. Copolymer nach Anspruch 1, **dadurch gekennzeichnet, dass** das Copolymer die Comonomer-Komponente (A) in Anteilen von 30 bis 99 Mol-% und die Comonomer-Komponente (B) in Anteilen von 70 bis 1 Mol-% enthält.

3. Copolymer nach Anspruch 2, **dadurch gekennzeichnet, dass** das Copolymer die Comonomer-Komponente (A) in Anteilen von 40 bis 90 Mol-% und die Comonomer-Komponente (B) in Anteilen von 60 bis 10 Mol-% enthält.

4. Copolymer nach einem der Ansprüche 1 bis 3, **dadurch gekennzeichnet, dass** die Comonomer-Komponente (A) für eine Acrylsäure oder ein Salz davon steht, und die Comonomer-Komponente (B) mit p = 0 eine Vinylgruppe und als R¹ einen Polyether enthält.

5. Copolymer nach einem der Ansprüche 1 bis 4, **dadurch gekennzeichnet, dass** die Comonomer-Komponente (A) ausgewählt wird aus der Gruppe bestehend aus Acrylsäure, Methacrylsäure, Crotonsäure, Isocrotonsäure, Allylsulfonsäure, Vinylsulfonsäure, und geeigneten Salzen sowie Alkyl- oder Hydroxyalkylestern davon.

6. Copolymer nach einem der Ansprüche 1 bis 5, **dadurch gekennzeichnet, dass** das Copolymer zusätzliche Baugruppen in copolymerisierter Form aufweist.

7. Copolymer nach Anspruch 6, **dadurch gekennzeichnet, dass** es sich bei den zusätzlichen Baugruppen um Styrole, Acrylamide oder/und hydrophobe Verbindungen handelt.

8. Copolymer nach Anspruch 7, **dadurch gekennzeichnet, dass** die hydrophoben Verbindungen Esterstruktureinheiten, Polypropylenoxid-und Polypropylenoxid/Polyethylenoxid-Einheiten enthalten.

9. Copolymer nach Anspruch 7 oder 8, **dadurch gekennzeichnet, dass** das Copolymer die zusätzlichen Baugruppen in Anteilen von bis zu 5 Mol-% enthält.

10. Copolymer nach Anspruch 9, **dadurch gekennzeichnet, dass** das Copolymer die zusätzlichen Baugruppen in Anteilen von 0,05 bis 3,0 Mol-% enthält.

11. Copolymer nach Anspruch 10, **dadurch gekennzeichnet, dass** das Copolymer die zusätzlichen Baugruppen in Anteilen von 0,1 bis 1,0 Mol-% enthält.

12. Copolymer nach einem der Ansprüche 1 bis 11, **dadurch gekennzeichnet, dass** die Formel (I) für einen Vinylgruppen-haltigen Polyether steht.

13. Copolymer nach einem der Ansprüche 1 bis 12, **dadurch gekennzeichnet, dass** das Copolymer in Pulverform vorliegt.

14. Copolymer nach Ansprüche 13, **dadurch gekennzeichnet, dass** das pulverförmige Copolymer durch Sprühtrocknung erhalten wurde.

15. Zusammensetzung, enthaltend ein Copolymer nach einem der Ansprüche 1 bis 14 und ein hydraulisches Bindemittel.

16. Zusammensetzung nach Anspruch 15, **dadurch gekennzeichnet, dass** es sich bei dem hydraulischen Bindemittel um Zement, Gips, Kalk, Anhydrit, oder ein sonstiges auf Calciumsulfat basierendes Bindemittel handelt.

17. Verwendung des Copolymers nach einem der Ansprüche 1 bis 14 als Verflüssiger für eine nicht-ausgehärtete und ein hydraulisches Bindemittel enthaltende Zusammensetzung.

18. Verwendung nach Anspruch 17, **dadurch gekennzeichnet, dass** das als Verflüssiger verwendete Copolymer in einer Menge von 0,01 bis 10,0 Gew.-%, bezogen auf das Gewicht der Bindemittel-Komponente, eingesetzt wird.

19. Verwendung nach Anspruch 18, **dadurch gekennzeichnet, dass** das als Verflüssiger verwendete Copolymer in einer Menge von 0,05 bis 5,0 Gew.-%, bezogen auf das Gewicht der Bindemittel-Komponente, eingesetzt wird.

20. Verwendung nach einem der Ansprüche 17-19, **dadurch gekennzeichnet, dass** das Copolymer gemeinsam mit einer Entschäumer-Komponente eingesetzt wird.

21. Verwendung nach Anspruch 20, **dadurch gekennzeichnet, dass** das Copolymer die Entschäumer-Komponente als dritte Baugruppe enthält.

## Claims

1. Copolymer consisting of two monomer components (A) and (B) wherein
(A) is an olefinically unsaturated monocarboxylic acid comonomer or an ester or salt thereof or is an olefinically unsaturated sulphuric acid comonomer or a salt thereof, and
(B) is a comonomer of the general formula (I) 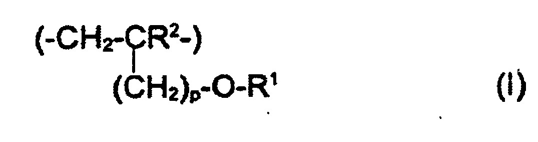
where R¹ represents
and R² represents hydrogen,
where R³ is an unsubstituted or substituted aryl radical and preferably is phenyl and R⁴ is hydrogen, an aliphatic hydrocarbyl radical having 1 to 20 carbon atoms, a cycloaliphatic hydrocarbyl radical having 5 to 8 carbon atoms, a substituted aryl radical having 6 to 14 carbon atoms or a representative from the group consisting of 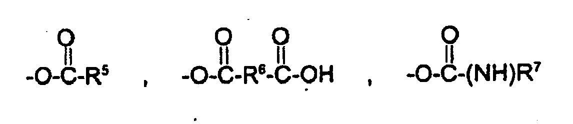 where R⁵ and R⁷ each represent an alkyl, aryl, aralkyl or alkaryl radical and R⁶ represents an alkylidene, arylidene, aralkylidene or alkarylidene radical,
p = 0,
m, n = 2 to 4,
x and y are independently from 55 to 350, and
z = 0 to 200.

2. Copolymer according to Claim 1, **characterized in that** the copolymer contains the comonomer component (A) in proportions of 30 to 99 mol% and comonomer component (B) in proportions of 70 to 1 mol%.

3. Copolymer according to Claim 2, **characterized in that** the copolymer contains the comonomer component (A) in proportions of 40 to 90 mol% and comonomer component (B) in proportions of 60 to 10 mol%.

4. Copolymer according to any one of Claims 1 to 3, **characterized in that** the comonomer component (A) represents an acrylic acid or a salt thereof and the comonomer component (B) where p = 0 contains a vinyl group and a polyether R¹.

5. Copolymer according to any one of Claims 1 to 4, **characterized in that** the comonomer component (A) is selected from the group consisting of acrylic acid, methacrylic acid, crotonic acid, isocrotonic acid, allylsulphonic acid, vinylsulphonic acid and suitable salts and also alkyl or hydroxyalkyl esters thereof.

6. Copolymer according to any one of Claims 1 to 5, **characterized in that** the copolymer comprises additional structural groups in copolymerized form.

7. Copolymer according to Claim 6, **characterized in that** the additional structural groups comprise styrenes, acrylamides or/and hydrophobic compounds.

8. Copolymer according to Claim 7, **characterized in that** the hydrophobic compounds contain ester structural units, polypropylene oxide and polypropylene oxide/polyethylene oxide units.

9. Copolymer according to Claim 7 or 8, **characterized in that** the copolymer contains the additional structural groups in proportions of up to 5 mol%.

10. Copolymer according to Claim 9, **characterized in that** the copolymer contains the additional structural groups in proportions of 0.05 to 3.0 mol%.

11. Copolymer according to Claim 10, **characterized in that** the copolymer contains the additional structural groups in proportions of 0.1 to 1.0 mol%.

12. Copolymer according to any one of Claims 1 to 11, **characterized in that** the formula (I) represents a vinyl-containing polyether.

13. Copolymer according to any one of Claims 1 to 12, **characterized in that** the copolymer is present in powder form.

14. Copolymer according to Claim 13, **characterized in that** the pulverulent copolymer was obtained by spray drying.

15. Composition containing a copolymer according to any one of Claims 1 to 14 and a hydraulic binder.

16. Composition according to Claim 15, **characterized in that** the hydraulic binder comprises cement, gypsum, lime, anhydrite or any other calcium sulphate-based binder.

17. Use of the copolymer according to any one of Claims 1 to 14 as a superplasticizer for a non-cured composition containing a hydraulic binder.

18. Use according to Claim 17, **characterized in that** the copolymer used as superplasticizer is used in an amount of 0.01 to 10.0% by weight, based on the weight of the binder component.

19. Use according to Claim 18, **characterized in that** the copolymer used as superplasticizer is used in an amount of 0.05 to 5.0% by weight, based on the weight of the binder component.

20. Use according to any one of Claims 17-19, **characterized in that** the copolymer is used together with a defoamer component.

21. Use according to Claim 20, **characterized in that** the copolymer contains the defoamer component as a third structural group.

## Revendications

1. Copolymère constitué de deux composants monomères (A) et (B),
(A) représentant un comonomère d'acide monocarboxylique à insaturation oléfinique ou un de ses esters ou un de ses sels, ou un comonomère d'acide sulfurique à insaturation oléfinique ou un de ses sels, et
(B) représentant un comonomère de formule générale (I) 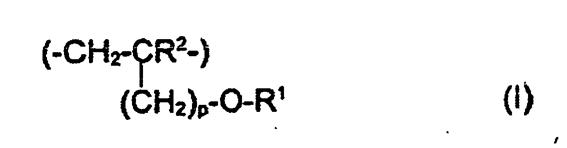
dans laquelle R¹ représente 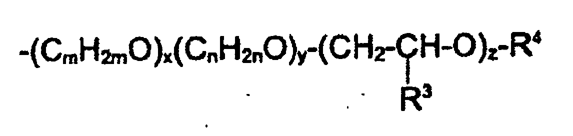 et R² représente l'hydrogène,
R³ représentant un radical aryle non substitué ou substitué et de préférence un phényle, et R⁴ représentant l'hydrogène, un radical hydrocarboné aliphatique ayant de 1 à 20 atomes de carbone, un radical hydrocarboné cycloaliphatique ayant de 5 à 8 atomes de carbone, un radical aryle substitué ayant de 6 à 14 atomes de carbone ou un membre du groupe constitué de 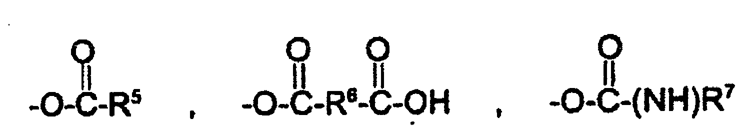 R⁵ et R⁷ représentant chacun un radical alkyle, aryle, aralkyle ou alcaryle et R⁸ représentant un radical alkylidène, arylidène, aralkylidène ou alcarylidène,
p = 0,
m, n = 2 à 4
x et y signifient indépendamment l'un de l'autre 55 à 350 et
z = 0 à 200.

2. Copolymère selon la revendication 1, **caractérisé en ce que** le copolymère contient le composant comonomère (A) en proportions de 30 à 99 % en moles et le composant comonomère (B) en proportions de 70 à 1 en moles.

3. Copolymère selon la revendication 2, **caractérisé en ce que** le copolymère contient le composant comonomère (A) en proportions de 40 à 90 % en moles et le composant comonomère (B) en proportions de 60 à 10 % en moles.

4. Copolymère selon l'une quelconque des revendications 1 à 3, **caractérisé en ce que** le composant comonomère (A) représente un acide acrylique ou un de ses sels et le composant comonomère (B) avec p = 0 contient un groupement vinyle et en tant que R¹ un polyéther.

5. Copolymère selon l'une quelconque des revendications 1 à 4, **caractérisé en ce que** le composant comonomère (A) est choisi dans le groupe constitué de l'acide acrylique, l'acide méthacrylique, l'acide crotonique, l'acide isocrotonique, l'acide allylsulfonique, l'acide vinylsulfonique et leurs sels et esters alkyliques ou hydroxyalkyliques appropriés.

6. Copolymère selon l'une quelconque des revendications 1 à 5, **caractérisé en ce que** le copolymère comporte des groupements constitutifs supplémentaires sous forme copolymérisée.

7. Copolymère selon la revendication 6, **caractérisé en ce que** les groupements constitutifs supplémentaires sont le styrène, l'acrylamide et/ou des composés hydrophobes.

8. Copolymère selon la revendication 7, **caractérisé en ce que** les composés hydrophobes contiennent des unités de structure ester, des unités oxyde de polypropylène et des unités oxyde de polypropylène/oxyde de polyéthylène.

9. Copolymère selon la revendication 7 ou 8,
**caractérisé en ce que** le copolymère contient les groupements constitutifs supplémentaires en proportions inférieures ou égales à 5 % en moles.

10. Copolymère selon la revendication 9, **caractérisé en ce que** le copolymère contient les groupements constitutifs supplémentaires en proportions de 0,05 à 3,0 % en moles.

11. Copolymère selon la revendication 10, **caractérisé en ce que** le copolymère contient les groupements constitutifs supplémentaires en proportions de 0,1 à 1,0 % en moles.

12. Copolymère selon l'une quelconque des revendications 1 à 11, **caractérisé en ce que** la formule (I) représente un polyéther contenant des groupements vinyles.

13. Copolymère selon l'une quelconque des revendications 1 à 12, **caractérisé en ce que** le copolymère se trouve sous forme de poudre.

14. Copolymère selon la revendication 13, **caractérisé en ce que** le copolymère sous forme de poudre est obtenu par séchage par pulvérisation.

15. Composition contenant un copolymère selon l'une quelconque des revendications 1 à 14 et un liant hydraulique.

16. Composition selon la revendication 15, **caractérisée en ce que** le liant hydraulique est du ciment, du gypse, de la chaux, de l'anhydrite ou un autre liant à base de sulfate de calcium.

17. Utilisation du copolymère selon l'une quelconque des revendications 1 à 14 en tant que plastifiant pour une composition non durcie et qui contient un liant hydraulique.

18. Utilisation selon la revendication 17, **caractérisée en ce que** le copolymère utilisé en tant que plastifiant est introduit en une quantité de 0,01 à 10,0 % en poids par rapport au poids du composant liant.

19. Utilisation selon la revendication 18, **caractérisée en ce que** le copolymère utilisé en tant que plastifiant est introduit en une quantité de 0,05 à 5,0 % en poids par rapport au poids du composant liant.

20. Utilisation selon l'une quelconque des revendications 17 à 19, **caractérisée en ce que** le copolymère est introduit accompagné d'un composant anti-mousse.

21. Utilisation selon la revendication 20, **caractérisée en ce que** le copolymère contient le composant anti-mousse en tant que troisième groupement constitutif.
